# EUROPEAN PATENT APPLICATION

(11) **EP 4 628 181 A2**
(43) Date of publication of application: **08.10.2025**
(21) Application number: 23897913.2
(22) Date of filing: 30.11.2023
(51) Int. Cl.: B01D 15/00, B01D 53/14, B01J 19/00, C01B 32/50

(54) **CARBON DIOXIDE RECOVERY METHOD AND FIRING DEVICE USED IN SAME**

(30) Priority: 30.11.2022 JP 2022201632
(71) Applicant: CIMS Japan Co. Ltd., Kobe-shi, Hyogo 652-0812 (JP)
(72) Inventor: CHIJIMATSU, Yoshihiro, Kobe-shi, Hyogo 652-0812 (JP)
(74) Representative: J A Kemp LLP
(86) International application number: PCT/JP2023/044119
(87) International publication number: WO 2024/117267

(57) **Abstract**

Provided is a carbon dioxide recovery method according to which it is possible to improve the marine environment while reducing greenhouse gases. In the carbon dioxide recovery method, calcium oxide b is produced by calcining calcium carbonate a serving as raw material, a heat pump is driven with the heat energy produced during the calcination, water c is cooled with cooling energy obtained by the heat pump, carbon dioxide d generated during the calcination is recovered into the cooled water, and at the same time the calcium oxide b obtained by the calcination is slaked to produce calcium hydroxide f. The calcium hydroxide f is exposed to the atmosphere to recover carbon dioxide d, and the calcium carbonate a obtained again in this manner is scattered on a landward side 22 of a high tide line 21 of a coast 2, which is an environment in which carbon dioxide is present during rainfall.

## Description

### Technical Field

The present invention relates to a carbon dioxide recovery method for reducing carbon dioxide and a calcination apparatus used therein.

### Background Art

Currently, efforts are being made worldwide to reduce carbon dioxide in order to prevent global warming.

Conventionally, one technique proposed for reducing the concentration of carbon dioxide in the atmosphere involves recovering carbon dioxide from outlets for exhaust gas emitted by factories and the like, and then mineralizing and fixing the recovered carbon dioxide underground. Regarding this technology, there are known storage facilities where demonstration experiments have already been carried out (e.g., see Non-Patent Document 1).

Another technology that has been proposed involves recovering carbon dioxide from the atmosphere, dissolving the recovered carbon dioxide in water, injecting it into the ground, allowing it to be absorbed to fix it underground, and then recovering hot spring water (e.g., see Patent Document 1).

### Citation List

### Patent Documents

Non-Patent Document 1: IPCC (2005) Special Report on Carbon Dioxide Capture and Storage: Prepared by Working Group III of the International Panel on Climate Change. Cambridge University Press, Cambridge and New York, 422 pp.
Patent Document 1: JP-T-2017-528318

### Summary of Invention

### Problem to be Solved by the Invention

However, when recovering carbon dioxide from an outlet for exhaust gas, it is not possible to recover carbon dioxide that has already been released into the atmosphere and diffused.

In addition, whether carbon dioxide is collected from an outlet for exhaust gas or from the atmosphere, it is mineralized and fixed underground. In both cases, it is thought that calcium oxide contained in the basalt forming the Earth's crust reacts with carbon dioxide to become calcium carbonate when the carbon dioxide is fixed underground. However, while suddenly guiding carbon dioxide from the atmosphere into the ground and mineralizing and fixing it in this manner may achieve the aim when consideration is given only to carbon dioxide reduction, it is far removed from the mechanism by which the natural environment originally reduced carbon dioxide. For this reason, other issues will arise, raising concerns that it will take time to improve the marine environment, which has been deteriorated by the increase in atmospheric carbon dioxide.

In addition, an absorption medium for absorbing the carbon dioxide is required, and after the carbon dioxide is absorbed into the absorption medium, the carbon dioxide needs to be extracted from the absorption medium, dissolved in water, and injected into the ground, which increases the cost of the absorption medium.

The present invention has been made in consideration of the above-mentioned circumstances, and aims to provide a carbon dioxide recovery method according to which it is possible to improve the marine environment and easily reduce greenhouse gases.

### Means for Solving the Problem

The carbon dioxide recovery method of the present invention for solving the above problems includes scattering calcium hydroxide and/or calcium carbonate on a landward side of, and adjacent to, a high tide line of a coast in a region where carbon dioxide is present during rainfall.

The carbon dioxide recovery method of the present invention for solving the above problems includes providing calcium hydroxide and/or calcium carbonate on a surface of a reef or a marine concrete structure on a landward side of, and adjacent to, a high tide line of a coast in a region where carbon dioxide is present during rainfall, the surface being above a portion that is immersed in seawater at high tide.

The carbon dioxide recovery method of the present invention for solving the above problems includes providing calcium hydroxide and/or calcium carbonate on a surface of a concrete structure of a river or waterway flowing into a coast of a region where carbon dioxide is present during rainfall, the surface of the concrete structure being above a planned water level of the river or waterway.

In the above carbon dioxide recovery method, the concrete structure may have been in place for three or more years since construction or may have internal aggregate exposed on its surface.

In the above carbon dioxide recovery method, calcium oxide may be produced by calcining calcium carbonate serving as raw material in a closed environment, and carbon dioxide released during calcination may be recovered or used, and the calcium oxide obtained through the calcination may be slaked to obtain calcium hydroxide, the calcium hydroxide may be exposed to the atmosphere to absorb carbon dioxide, thereby obtaining calcium carbonate again, and the calcium hydroxide and/or calcium carbonate obtained in this manner may be used.

In the above carbon dioxide recovery method, renewable energy may be used in the calcination of calcium carbonate.

In the above carbon dioxide recovery method, the calcium carbonate serving as raw material may be seashells.

In the above carbon dioxide recovery method, heat energy generated when calcining the calcium carbonate serving as raw material may be used to prepare hot water to be stored in a water heater, or to adjust the temperature of a greenhouse.

In the above carbon dioxide recovery method, the carbon dioxide generated when the calcium carbonate serving as raw material is calcined may be allowed to permeate underground, where it is mineralized and fixed, recovered by being adsorbed onto a carbon dioxide adsorbent, directly recovered as carbon dioxide gas, used as raw material for a synthetic fuel, or released into a greenhouse for use in production of a crop.

In the above carbon dioxide recovery method, a heat pump may be driven by heat energy generated when the calcium carbonate serving as raw material is calcined, water is cooled by cooling energy obtained by the heat pump, carbon dioxide generated during the calcination is recovered in the cooled water, and carbonated water obtained in this manner may be allowed to permeate underground, where it is mineralized and fixed, used in production of a crop, used as raw material for a synthetic fuel, or used as a culture solution for photosynthesis.

The calcination apparatus of the present invention for solving the above problems is an apparatus for calcining calcium carbonate to be used in the above carbon dioxide recovery method, including a reaction vessel capable of storing calcium carbonate raw material in a sealed state, in which the reaction vessel is provided with a heater that uses renewable energy to heat the calcium carbonate raw material introduced into the reaction vessel to a temperature at which the calcium carbonate raw material is decomposed into calcium oxide and carbon dioxide, and the reaction vessel is provided with an exhaust path for separating and recovering the carbon dioxide obtained in the reaction vessel from the reaction vessel to the outside of the reaction vessel by decomposition pressure and/or pressure feeding.

The above calcination apparatus may include a gas cylinder to be filled with carbon dioxide generated in the reaction vessel, the gas cylinder being provided at an exhaust destination of the exhaust path.

In the above calcination apparatus, the reaction vessel may be provided with a water supply path that supplies water for obtaining calcium hydroxide by adding water to and slaking the calcium oxide obtained in the reaction vessel.

The above calcination apparatus may further include: a heat pump that utilizes heat generated in the reaction vessel; and a carbon dioxide absorption device that produces cooled water by cooling water using cooling energy obtained by the heat pump and absorbs carbon dioxide into the cooled water, in which the exhaust destination of the exhaust path is connected to the carbon dioxide absorption device such that the carbon dioxide from the exhaust path is dissolved in the cooled water of the carbon dioxide absorption device.

### Advantageous Effects of the Invention

As described above, according to the present invention, when calcium hydroxide and/or calcium carbonate is provided on the landward side of, and adjacent to, a high tide line on a coast of a region where carbon dioxide is present during rainfall, or is provided on a surface of a concrete structure of a river or waterway flowing into a coast of a region where carbon dioxide is present during rainfall, the surface of the concrete structure being above a planned water level of the river or waterway, the calcium hydroxide absorbs carbon dioxide in the rainwater and becomes calcium carbonate, and the calcium carbonate absorbs carbon dioxide in the rainwater, which is a cause of acid rain due to rainfall, and becomes calcium bicarbonate. This exerts a buffering effect against acid rain and solves the problem of a decrease in the pH of the ocean caused by acid rain in which carbon dioxide is dissolved. In addition, calcium ions and bicarbonate ions can easily be obtained from the calcium bicarbonate transformed by exerting the buffering effect. Therefore, shellfish such as bivalves that grow by burrowing into sand, and shellfish such as snails that grow by attaching themselves to reefs, as well as foraminifera and coral, can easily obtain calcium carbonate that forms their skeletons, and seaweed can easily obtain carbon dioxide needed for photosynthesis, establishing an environment suitable for growth. Accordingly, the number of fish that feed on these will increase, improving the marine environment and making it more favorable for fishing. Note that, as mentioned above, calcium bicarbonate is decomposed in the ocean into calcium carbonate that forms the shells of shellfish and carbon dioxide that is consumed in the photosynthesis of seaweed, and is reused. However, calcium bicarbonate that flows into the Earth's crust eventually permeates the basalt layers in the Earth's crust, where it is mineralized and fixed.

In addition, 1 mole of carbon dioxide generated during the calcination of 1 mole of calcium carbonate serving as raw material can be recovered or used by, for example, fixing it underground, adsorbing it onto an adsorbent, using it in the production of an agricultural crop, using it as a culture solution, or using it as a raw material for synthetic fuel, either as-is or after being made into carbonated water. At the same time, the obtained calcium oxide can be slaked to obtain calcium hydroxide, and this calcium hydroxide can be exposed to the atmosphere to recover 1 mole of carbon dioxide, thereby making it possible to recover 2 moles of carbon dioxide from 1 mole of calcium carbonate. In addition, 1 mole of carbon dioxide is further recovered from this 1 mole of calcium carbonate to form calcium bicarbonate, and therefore a total of 3 moles of carbon dioxide can be recovered from 1 mole of calcium carbonate serving as raw material.

Of this, 1 mole of carbon dioxide is the carbon dioxide that was originally fixed in the calcium carbonate of the raw material and then released. This released carbon dioxide can be fixed underground, adsorbed onto an adsorbent, used in the production of agricultural products, used as a culture solution, used as a raw material for synthetic fuel, or recovered as carbon dioxide gas and used in other ways, either as-is or after being made into carbonated water, and therefore is not released into the atmosphere. Furthermore, calcium hydroxide obtained by slaking the calcium oxide obtained after the release can be exposed to a desired atmosphere to recover carbon dioxide that has already been released into the atmosphere, making it an effective method of recovering carbon dioxide.

### Brief Description of Drawings

FIG. 1 is a process diagram showing part of the overall configuration of the carbon dioxide recovery method according to the present invention, and shows a process from recovering carbon dioxide from calcium carbonate to obtaining calcium hydroxide.
FIG. 2 is a process diagram showing part of the overall configuration of the carbon dioxide recovery method according to the present invention, and shows a process from recovering carbon dioxide from calcium hydroxide to obtaining calcium carbonate.
FIG. 3 is a process diagram showing a part of the overall configuration of the carbon dioxide recovery method according to the present invention, and shows a process from recovering carbon dioxide from calcium carbonate to obtaining and using calcium bicarbonate.
FIG. 4 is a configuration diagram showing an overview of the overall configuration of a calcination apparatus used when recovering carbon dioxide from calcium carbonate in the carbon dioxide recovery method according to the present invention.
FIG. 5 is a schematic diagram showing an example of a method for utilizing carbonated water obtained in the carbon dioxide recovery method according to the present invention.
FIG. 6 is a schematic diagram showing another example of a method for utilizing carbonated water obtained in the carbon dioxide recovery method according to the present invention.
FIG. 7 is a schematic diagram showing yet another example of a method for utilizing carbonated water obtained in the carbon dioxide recovery method according to the present invention.
FIG. 8 is a configuration diagram showing another embodiment of a calcination apparatus used when recovering carbon dioxide from calcium carbonate in the carbon dioxide recovery method according to the present invention.
FIG. 9 is a process diagram illustrating part of the overall configuration of the carbon dioxide recovery method according to the present invention, and illustrates a case in which a process from recovering carbon dioxide from calcium carbonate to obtaining and utilizing calcium bicarbonate is performed on a reef.
FIG. 10 is a process diagram illustrating part of the overall configuration of the carbon dioxide recovery method according to the present invention, and illustrates a case in which a process from recovering carbon dioxide from calcium carbonate to obtaining and utilizing calcium bicarbonate is performed on a quay.
FIG. 11 is a process diagram illustrating part of the overall configuration of the carbon dioxide recovery method according to the present invention, and illustrates a case in which the process from recovering carbon dioxide from calcium carbonate to obtaining and utilizing calcium bicarbonate is performed on a breakwater and wave-dissipating blocks.
FIG. 12 is a photograph showing a cover for a roadside gutter that has just been replaced and a cover for a roadside gutter in which aggregate is exposed due to change over time, in the carbon dioxide recovery method according to the present invention.

### Description of Embodiments of the Invention

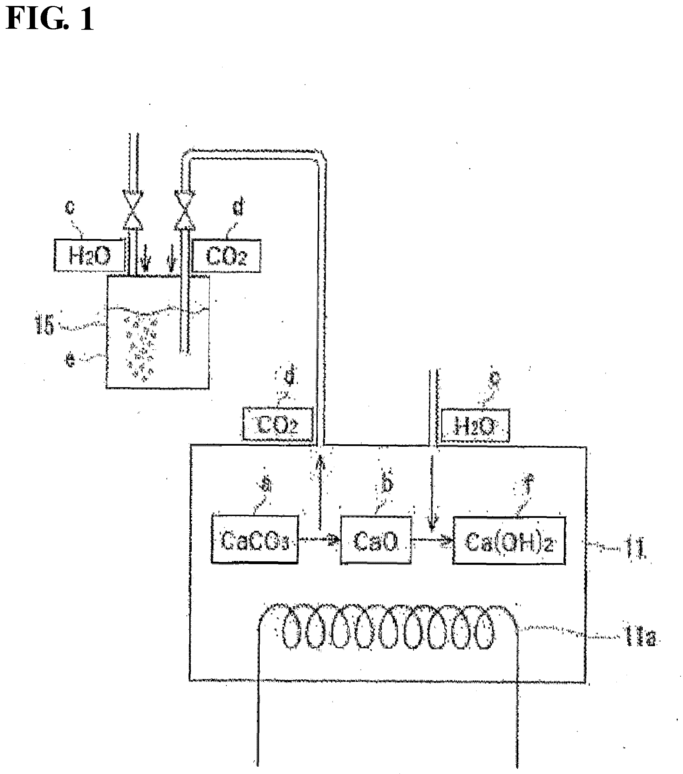

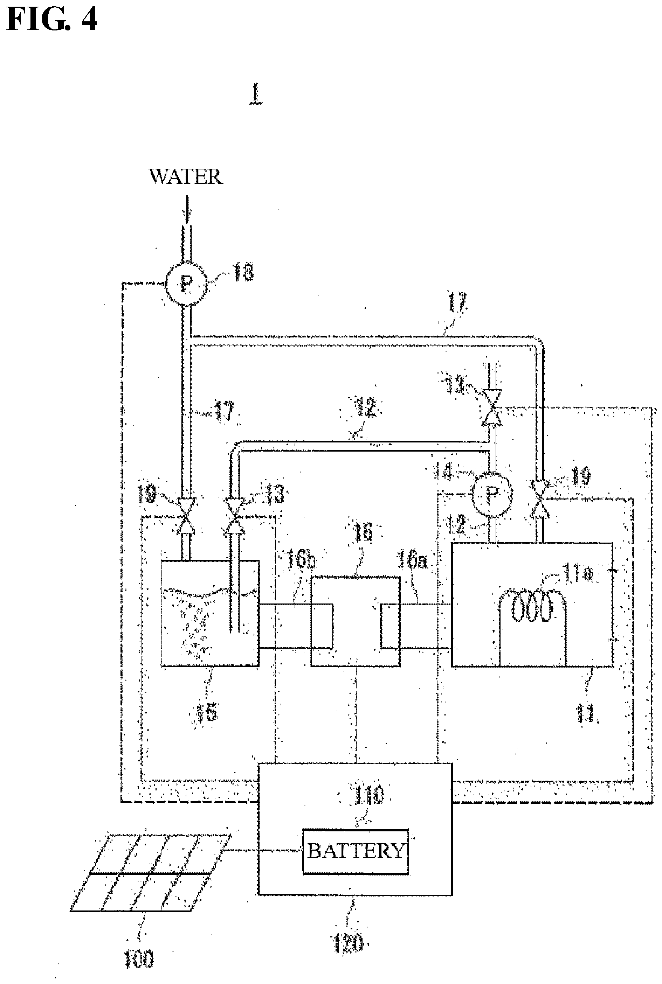

FIGS. 1 to 3 show an overview of the overall configuration of a carbon dioxide recovery method according to the present invention, and FIG. 4 shows an overview of the overall configuration of a calcination apparatus 1 used in the carbon dioxide recovery method.

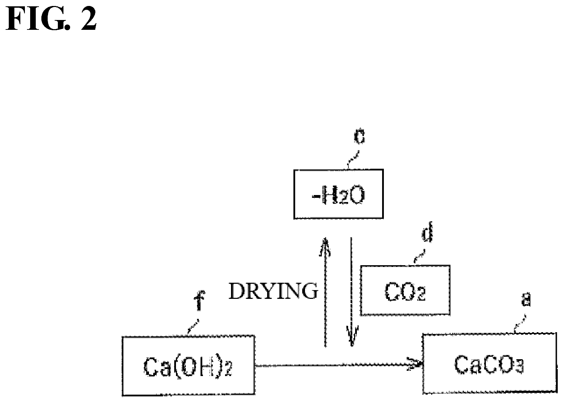

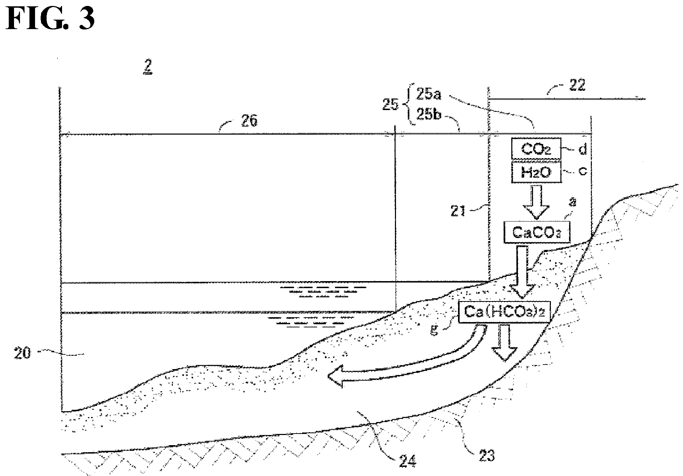

That is, in the carbon dioxide recovery method of the present invention, as shown in FIG. 1, calcium oxide b is produced by calcining calcium carbonate a serving as raw material, heat energy from the calcination is used to drive a heat pump 16 (see FIG. 4), and cooling energy obtained by the heat pump 16 is used to cool water c. Carbon dioxide d generated during the calcination is recovered into the cooled water to obtain carbonated water e, and water c is added to the calcium oxide b obtained by the calcination to slake it and obtain calcium hydroxide f. As shown in FIG. 2, the calcium hydroxide f is exposed to the atmosphere to recover carbon dioxide d. As shown in FIG. 3, calcium carbonate a that is thus re-obtained is scattered on a backshore 25a on a landward side 22 of a high tide line 21 of a coast 2 that becomes an acidic environment during rainfall.

Limestone or seashells may be used as the calcium carbonate a serving as raw material. When using seashells, since organic matter such as seaweed adheres to the surfaces of the seashells, the seashells may be dried in the sun or the like to decompose the organic matter by ultraviolet light before use. The calcium carbonate a serving as raw material may be a raw material that has previously been crushed into granules, and more preferably into powder, and in the case of seashells, may be used as-is.

Calcium oxide b can be obtained by calcining the calcium carbonate a serving as raw material at 800 to 900°C. In this case, the calcination may be performed using fossil fuels. However, if such fossil fuels are used for calcination, excess carbon dioxide d will be generated by combustion. Therefore, it is preferable to charge the calcination apparatus with electrical energy generated using a renewable energy source such as solar power generation, and perform the calcination through electrical heating using the electrical energy. The electrical heating may be performed by a heater 11a or by electromagnetic induction heating. Alternatively, calcination may be performed by focusing sunlight directly without converting the sunlight into electricity. This calcination decomposes the calcium carbonate a into calcium oxide b and carbon dioxide d. At this time, for example, by performing the calcination in a closed-system reaction vessel 11, carbon dioxide d generated in the reaction vessel 11 can be collected. In addition, water c can be added to the obtained calcium oxide b to slake it and obtain calcium hydroxide f. Note that in addition to solar power generation, other renewable energy sources include hydroelectric power, wind power, geothermal power, biomass, and waste heat. However, solar power generation is preferred because it is readily available. The heat source can be waste heat from an incinerator, a thermal power plant, or the like.

The recovery of carbon dioxide d generated during the calcination of calcium oxide b is not particularly limited, but it is preferable to absorb it in water c, since this is the most inexpensive method for recovery and the easiest to use. Since the absorption efficiency improves as the water temperature decreases, it is more preferable to absorb the carbon dioxide in cooled water to recover the carbon dioxide. This recovery can be performed, for example, by using cooled water obtained by using the heat generated during the calcination of the calcium carbonate a to drive the heat pump 16, which then cools the water c.

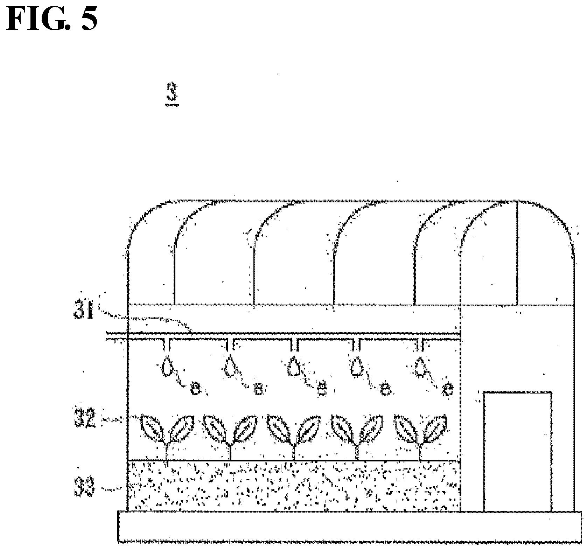

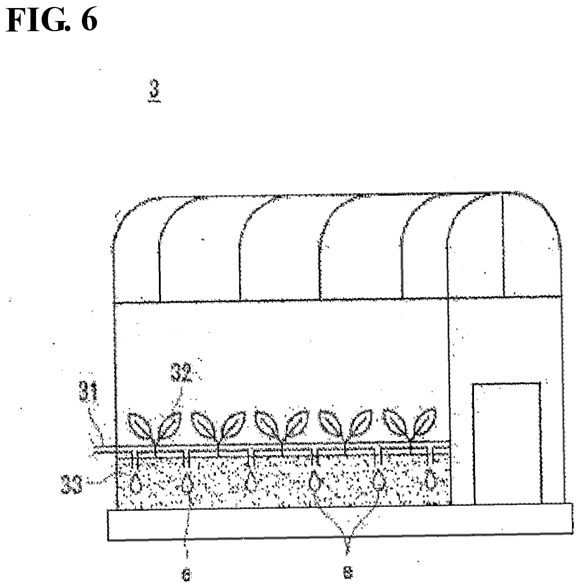

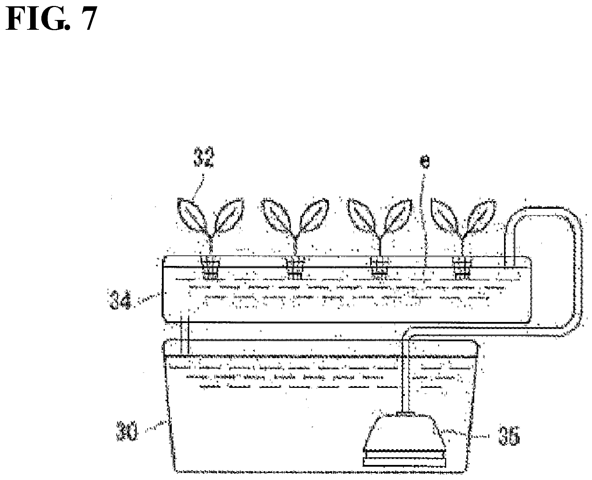

Carbonated water e obtained by absorbing carbon dioxide d in water c in this manner may be used for cultivating a crop 32 by spraying the crop 32 and soil 33 from piping 31 installed in a greenhouse 3 in place of carbon dioxide gas used in the greenhouse 3, as shown in FIG. 5, may be absorbed by the roots of the crop 32 and used for photosynthesis by installing the piping 31 such that carbonated water e is directly injected into the soil 33 for use in cultivating the crop 32, as shown in FIG. 6, and may be used as a culture solution for hydroponic cultivation by placing carbonated water e in a water tank 30 for hydroponic cultivation and circulating carbonated water e to a cultivation tank 34 for the crop 32 with a pump 35, as shown in FIG. 7. Carbonated water e may also be used as a culture solution for various plants that grow by photosynthesis other than the crop 32. Specifically, it can be used as a culture solution for growing Euglena, which is raw material for a synthetic fuel. Note that the apparatus configuration for hydroponic cultivation is not particularly limited. In addition, carbonated water e may be used as raw material for when synthesizing a synthetic fuel such as alcohol, or it may be filtered and used as a beverage. Another example of use as raw material for a synthetic fuel may be in the production of synthetic petroleum produced by reacting radical water, seed oil, and carbon dioxide (e.g., WO 2016/103762, Edelweiss Chemical Science Journal Research Article ISSN: 2641-7383 Chemical Synthesis of Fuel Hydrocarbon from CO2 and Activated Water, and Purification of Commercial Light Oil for Dream Oil).

Note that when carbonated water e is scattered on the soil 33 or injected directly into the soil 33, there is a concern that if carbon dioxide d in the carbonated water e is not completely consumed, the carbon dioxide d will escape from the soil 33 and return to the atmosphere. However, since the carbon dioxide d has a molecular weight of 44 g and is heavier than the nitrogen and oxygen in the air, it can be retained in the soil 33 for a long time. However, if the amount of carbon dioxide d produced by the supply of the carbonated water e still becomes excessive, then by using soil 33 in a closed system such as the greenhouse 3 described above, the amount of carbon dioxide d used can be controlled while using both carbonated water e and water c. Even if the soil 33 is not soil in a closed system such as the greenhouse 3, by scattering calcium hydroxide f and/or calcium carbonate a on the soil 33, excess carbon dioxide d will be absorbed by the calcium hydroxide f and/or the calcium carbonate a, the calcium hydroxide f will become calcium carbonate a, and the calcium carbonate a will become liquid calcium bicarbonate g. The excess carbon dioxide d will become this calcium bicarbonate g, permeate the soil 33, and eventually be fixed in the form of calcium carbonate a in the basalt in the ground.

On the other hand, calcium hydroxide f obtained through calcination and slaking can be exposed to the atmosphere to absorb carbon dioxide d. The calcium hydroxide f absorbs carbon dioxide d from the atmosphere and becomes calcium carbonate a. At this time, by exposing the calcium hydroxide f to a desired location, the carbon dioxide d that has already been released into the atmosphere can be recovered. In addition, this calcium hydroxide f may be applied to a location where carbon dioxide d is likely to be generated in advance, thereby efficiently recovering carbon dioxide d, or may be applied to a location where calcium carbonate a described below is provided to recover carbon dioxide d, thereby recovering carbon dioxide d in the same manner as with the calcium carbonate a.

FIG. 4 shows an example of a specific calcination apparatus 1. In this calcination apparatus 1, piping 12 provided in a closed-system reaction vessel 11 branches into two, each of which is provided with an on-off valve 13. By switching the on-off valve 13, it is possible to evacuate the reaction vessel 11 with a vacuum pump 14, or to send carbon dioxide d generated in the reaction vessel 11 to a carbon dioxide absorption device 15. The reaction vessel 11 is provided with a heater 11a that uses electrical energy charged in a battery 110 from a solar panel 100 to perform heating, and the inside of the reaction vessel 11 can be heated to 800 to 900°C by this heater 11a. A heat exchanger 16a of the heat pump 16 is connected to the reaction vessel 11 such that the heat generated in the reaction vessel 11 can be utilized, and a cooling and heating exchanger 16b of the heat pump 16 is connected to the carbon dioxide recovery device 15 such that the cooling and heating heat exchanger 16b generated by the heat pump 16 cools water c in the carbon dioxide recovery device 15 to produce cooled water. This water c is connected to the reaction vessel 11 and the carbon dioxide absorption device 15 via supply paths 17 branched off from a pump 18, and an on-off valve 19 is provided on each of the supply paths 17. The water c from the pump 18 can be supplied to the carbon dioxide absorption device 15 via the supply path 17 or to the reaction vessel 11 by switching an on-off valve 19. In the reaction vessel 11, by performing slaking by adding water c to the calcium oxide b generated by the above-mentioned heating at 800 to 900°C, the calcium oxide b can be converted into calcium hydroxide f. Note that if water pressure from a water main is used, the pump 18 can be omitted since control can be performed by the on-off valve 19.

The calcination apparatus 1 includes a control unit 120 that is configured to start processing when sufficient electrical energy for processing calcium carbonate a according to the capacity of the reaction vessel 11 is obtained by charging the battery 110 from the solar panel 100, and the calcination apparatus 1 is configured to perform batch-type processing that starts operation when the amount of electrical energy required for one instance of processing is charged. In this calcination apparatus 1, first, the calcium carbonate a serving as raw material is introduced into the reaction vessel 11, the reaction vessel 11 is closed, and after reducing the pressure with the vacuum pump 14, heating is performed at 800 to 900°C with the heater 11a. Calcium carbonate a decomposes into calcium oxide b and carbon dioxide d to generate carbon dioxide d. The generated carbon dioxide d is supplied to water c in the carbon dioxide absorption device 15 through the piping 12, and the carbon dioxide d is absorbed into the water c to produce carbonated water e. The supply of this carbon dioxide d causes the water c supplied to the carbon dioxide absorption device 15 to increase in temperature, but by cooling the water c using the heat pump 16 in the carbon dioxide absorption device 15, carbonated water e that has absorbed a sufficient amount of carbon dioxide d can be obtained. The amount of carbon dioxide d generated can be calculated from the calcium carbonate a serving as raw material introduced into the reaction vessel 11, and therefore the path is closed when a predetermined amount of carbon dioxide d has been sent to the carbon dioxide absorption device 15. Slaking is then performed by adding water c to the calcium oxide b generated in the reaction vessel 11, thereby obtaining calcium hydroxide f. The calcium hydroxide f obtained in this manner does not use fossil fuels, and can therefore be obtained without substantially emitting carbon dioxide d. The piping 12 from the reaction vessel 11 to the vacuum pump 14 is preferably provided with a distance to allow sufficient cooling, or is cooled by air or water. In order to prevent high-temperature carbon dioxide d from passing directly through the vacuum pump 14, the piping 12 may be connected in parallel to the vacuum pump 14, and each portion of the piping 12 may be opened and closed by an on-off valve (not shown). In this case, the high-temperature carbon dioxide d may be passed through the piping 12 provided in parallel without passing through the vacuum pump 14, or, when the carbon dioxide d is being generated, it may be passed through the piping 12, and at the final stage of generation of the carbon dioxide d, the piping 12 may be switched to the side where the vacuum pump 14 is provided, and the carbon dioxide d in the reaction vessel 11 may be sent to the carbon dioxide absorption device 15 by the vacuum pump 14. Of course, as long as sufficient cooling can be obtained in the piping 12 from the reaction vessel 11 to the vacuum pump 14, the carbon dioxide d may be sent to the carbon dioxide absorption device 15 by the vacuum pump 14.

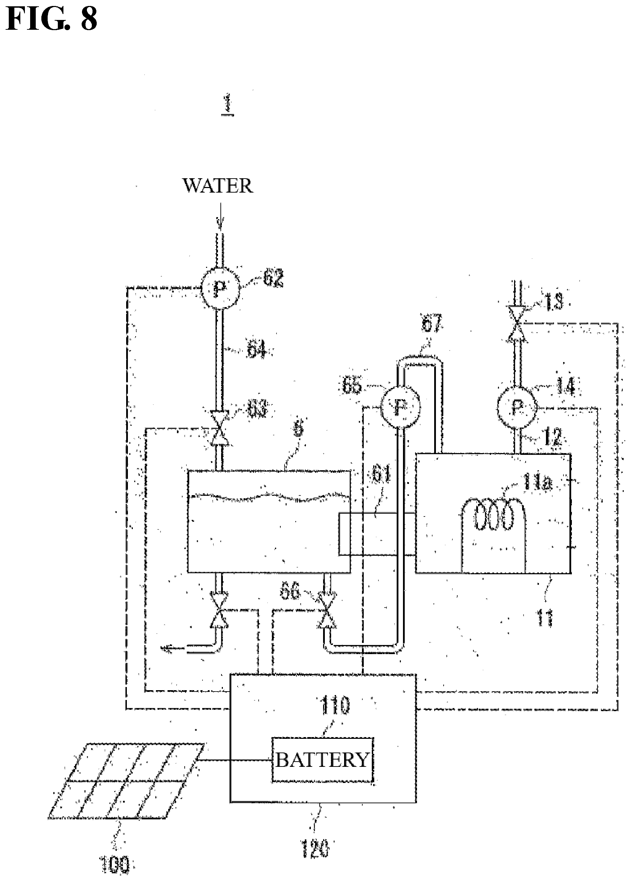

Note that the calcination apparatus 1 converts the heat energy generated during calcination into cooling energy using the heat pump 16, and the cooled water obtained using the cooling energy absorbs carbon dioxide d to produce carbonated water e. However, the calcination apparatus 1 is not limited to this configuration. Instead of the carbon dioxide absorption device 15 and the heat pump 16, the calcination apparatus 1 may include a water heater 6 that uses the heat energy generated during calcination to store hot water, as shown in FIG. 8. The differences from the calcination apparatus 1 shown in FIG. 4 will be described. The reaction vessel 11 is the same and is therefore designated by the same reference numerals as in FIG. 1. A heat exchanger 61 provided in the reaction vessel 11 utilizes a portion of the heat obtained in the reaction vessel 11 to heat water c stored in the water heater 6 and prepare hot water, and the water c is supplied to the water heater 6 from a water intake path 64 via a pump 62 and a water intake valve 63. The hot water heated by the water heater 6 can be used for hot water supply in the same manner as a normal water heater 6, and the hot water can be supplied to the reaction vessel 11 via a supply path 67 provided with a pump 65 and an on-off valve 66, whereby the hot water or water vapor can be supplied to the calcium oxide b obtained by calcining in the reaction vessel 11 to perform slaking. Note that when slaking with water c rather than hot water or water vapor, the pump 65 may be omitted, and the water supply path 64 downstream of the pump 62 may be branched off to provide the supply path 67 via the on-off valve 66 to the reaction vessel 11. Some of the heat obtained by the hot water from this water heater 6 may be used to adjust the temperature of the greenhouse 3, or the heat obtained from the heat exchanger 61 may be released directly into the greenhouse 3 to adjust the temperature of the greenhouse 3.

On the other hand, in the case of the calcination apparatus 1 shown in FIG. 4, the carbon dioxide absorption device 15 and the heat pump 16 are provided to absorb the carbon dioxide d generated during calcination into the cooled water to obtain the carbonated water e, but in the calcination apparatus 1 shown in FIG. 8, the carbon dioxide d obtained through calcination may be directly extracted from the piping 12 using the vacuum pump 14 and the on-off valve 13, and may be allowed to permeate into the ground where it is mineralized and fixed. In this case, the ground into which the carbon dioxide d is allowed to permeate is preferably the ground directly beneath land where carbon dioxide is consumed through photosynthesis, such as a forest or farmland. That is, in the case of a forest or farmland, the ground directly beneath the forest or farmland stores sufficient moisture when it rains or the like, and this moisture in the ground easily acts as a solvent for dissolving carbon dioxide d. Accordingly, when carbon dioxide d permeates into the ground and reaches a layer of basalt in the Earth's crust, it is mineralized and fixed as calcium carbonate a. In addition, even if the carbon dioxide d that has permeated the ground becomes saturated, plants in forests and farmland will consume the carbon dioxide d through photosynthesis, making it difficult for the carbon dioxide d that has permeated into the ground to diffuse back into the atmosphere. Moreover, although this differs depending on the region, the temperature of the ground is stable at about 10°C to 17°C throughout the year at a certain depth of 8 m to 10 m or more, and therefore the carbon dioxide d that has permeated into the ground can be stably absorbed regardless of the season. Permeation of carbon dioxide d into the ground can be performed by guiding the generated carbon dioxide d through the piping 12 or the like to an appropriate depth in the ground, preferably to a depth of 8 to 10 m, and supplying it directly to the ground. If there is a shortage of water c serving as an absorption solvent in the ground, water c serving as an absorption solvent may be supplied together with the supply of carbon dioxide d. When water c is supplied to the ground as an absorption solvent, the water c absorbs carbon dioxide d and becomes carbonated water e, and this carbonated water e may be pumped out for use. In addition, calcium carbonate a may be added as another absorption solvent. In the case of calcium carbonate a, trace amounts of carbon dioxide d are absorbed to obtain liquid calcium bicarbonate g, making it easier to penetrate deeper into the Earth's crust. When used for photosynthesis, the carbon dioxide d does not need to be guided to a depth of 8 to 10 m or more, and can be guided to a depth of less than 8 m. The carbon dioxide d may also be guided to a layer of basalt in the Earth's crust. In this case, carbon dioxide is fixed to calcium oxide, which is a component of basalt, to form calcium carbonate, which can then be fixed in the Earth's crust.

Incidentally, the carbon dioxide d generated through the calcination may be recovered by adsorbing it onto an ammonia-based adsorbent such as ammonia or a solid amine, a porous adsorbent, or another carbon dioxide adsorbent, instead of using the carbon dioxide absorption device 15 described above. Also, the carbon dioxide may be directly recovered in a gas cylinder (not shown in the drawings, as the carbon dioxide recovery device 15 connected to the piping 12 in FIG. 4 is simply replaced with a gas cylinder). However, when directly recovering the calcium carbonate in a gas cylinder (not shown), the calcium carbonate a serving as raw material is calcined at 800 to 900°C, whereby the calcium carbonate a decomposes into calcium oxide b and carbon dioxide d, generating carbon dioxide d, and therefore it is necessary to recover the carbon dioxide d at a high temperature. Accordingly, the piping 12 leading from the reaction vessel 11 to the gas cylinder (not shown) may be increased in length, or the outside of the piping 12 may be cooled with air, water, or the like, for example, to dissipate heat to the outside of the piping 12, and then the cooled carbon dioxide d may be recovered in the gas cylinder (not shown).

In addition, the carbon dioxide d generated through calcination may be released into an enclosed space such as the greenhouse 3 and used as carbon dioxide d for producing the crop 32. As described above, the carbon dioxide d may be converted into carbonated water e, absorbed into the ground, adsorbed onto a carbon dioxide adsorbent, released into the greenhouse 3 for use in producing the crop 32, or used as raw material for synthetic fuel, and more than one of these techniques may be used in combination.

Furthermore, the calcination apparatus 1 is configured to perform batch-type processing in which the battery 110 is charged from the solar panel 100 and operation starts when the amount of electrical energy required for one instance of processing has been charged, but the calcination apparatus 1 may also be configured to use only the solar panel 100 without the battery 110. In this case, since the calcination depends on the electrical energy obtained by the solar panel 100 during the day, the amount of calcium carbonate a that can be processed in one instance may be determined by calculating backwards from the electrical energy obtained by the solar panel 100, or the calcination may be performed by raising the temperature over several days. However, when the temperature is increased over several days, it is necessary to increase the heat retention such that the temperature of the reaction vessel 11 from the previous day does not decrease.

The calcium hydroxide f obtained in this manner may be used as-is in the form of powder or granules, or in the case of seashells, it may be used after the seashells have been calcined, or after being pulverized into powder or granules after calcination. In addition, calcium hydroxide f can be made into a paste-like coating material by adding water c and then applying it to something, thereby giving it a high specific surface area and making it easier to recover carbon dioxide d. In this case, in addition to using calcium hydroxide f in the form of a paste made with water c, calcium hydroxide f may also be used in the form of what is called a plaster prepared by adding adhesive or the like to this paste. In this case, the plaster that can be used is made by thoroughly kneading calcium hydroxide f with water c and adhesive. The plaster may also contain various types of aggregates, plastering fibers, and the like. The adhesive may be a natural adhesive derived from seaweed, which is commonly used in plaster, or a synthetic adhesive such as water-based acrylic resin. In addition, nanofibers or the like may be added instead of plastering fibers or glue. The calcium hydroxide f in this plaster absorbs carbon dioxide d, producing calcium carbonate a and water c.

However, because adhesive, plastering fibers, and nanofibers have good water retention, when calcium hydroxide f absorbs carbon dioxide d and changes into calcium carbonate a, it absorbs the water c that is produced at the same time, making it difficult to dry, which may lead to the growth of mold and the like. In such a case, it is preferable not to add adhesive, plastering fibers, nanofibers, and the like, or to use only the minimum amount possible, or to add a photocatalyst such as titanium oxide to prevent the occurrence of mold.

The recovery of carbon dioxide d from calcium hydroxide f may use a form that can be applied like the above-mentioned paste or plaster, or may be in the form of powder. This can be applied to, for example, rails, sleepers, and utility poles that do not come into contact with the wheels of railway vehicles, power control towers and their foundations for power transmission lines, pipes and tanks for various plants, and infrastructure facilities that support various social foundations such as bridges and bridge piers. However, when applying these coating materials to the surface of a steel member, in order to prevent the steel member from being corroded by calcium hydroxide f, the surface of the steel member is first coated with epoxy resin or covered with various inorganic fibers such as basalt fibers, glass fibers, mineral fibers, rock fibers, artificial mineral fibers, and ceramic fibers to form a protective layer on the surface of the steel member, and then the coating material is applied to the surface after the steel member has been protected. In addition, when applying the coating material to a surface such as concrete, the concrete itself is alkaline, and therefore the coating material can be applied as-is to the surface. When using the powder as-is, it can be placed in a breathable filter container (not shown) or the like in an exhaust path such as a chimney where carbon dioxide d is likely to be generated, or it can be scattered directly on the ground surface or the like.

Calcium hydroxide f and/or calcium carbonate a obtained by recovering carbon dioxide d from this calcium hydroxide f is scattered on a backshore 25a on the landward side 22 of, and adjacent to, the high tide line 21 of the coast 2 where carbon dioxide d is present during rainfall, as shown in FIG. 3. Note that an environment in which carbon dioxide d is present during rainfall need only be an environment in which the rainwater that falls has absorbed carbon dioxide d. The important point here is that calcium hydroxide f and/or calcium carbonate a are scattered not into the seawater 20 of the coast 2, which is an environment in which carbon dioxide d exists during rainfall, but on the backshore 25a on the landward side 22 of, and adjacent to, the high tide line 21 of the coast 2. That is, the concentration of carbon dioxide d in the atmosphere is currently rising, and the pH of rainwater has become acidic, at 5 to 6, which means that shallow waters and the sea surface in the marine environment are being exposed to these acid rains. Accordingly, the pH of seawater 20, which was about 8.17 before the Industrial Revolution, has decreased to about 8.06. In areas near river mouths where rainwater easily flows in, in harbors with small currents, and the like, the alkalinity of seawater 20 cannot be maintained and it has become acidic. This not only causes the pH of seawater 20 to decrease, but also leads to a decline in fish catch volume. Unravelling this phenomenon chemically through reverse engineering, it is found that shellfish such as bivalves, foraminifera, and the like are preyed upon by sea bream, grouper, filefish, pufferfish, octopus, and the like, and the shells are crushed and excreted as droppings, which are then deposited, forming a portion of sand 24 on a seabed 23. The main component of the crushed shells that become these droppings is calcium carbonate a, which does not dissolve in alkaline seawater 20 and is deposited on the sand 24 on the seabed 23 through the feeding behavior described above. Calcium carbonate a deposited in the sand 24 on the seabed 23 is washed ashore by waves together with the sand 24, forming a beach 25. For example, a beach 25, where foraminifera shells that are mainly composed of calcium carbonate a have washed ashore, is known as a star sand beach 25. This calcium carbonate a does not dissolve in an alkaline environment, but does dissolve in small amounts in water c and dissolves in acid rain containing carbon dioxide d. Therefore, the calcium carbonate a in the backshore 25a of the beach 25 that is not submerged in seawater 20 acts as a buffer against acid rain, absorbing further carbon dioxide d and eventually becoming liquid calcium bicarbonate g. When water c evaporates after rain, this calcium bicarbonate g returns to carbon dioxide d and calcium carbonate a. However, because it has accumulated on the backshore 25a, which has good drainage, the calcium bicarbonate g that has permeated deep into the backshore 25a remains liquid and permeates into the sand 24, and then flows underground toward the sea. Accordingly, inside the sand 24 of the marine area near the boundary with the land, the concentration of calcium bicarbonate g becomes high, making it an environment rich in calcium bicarbonate g from which young oysters can easily obtain calcium carbonate a to form their skeletons, and from which seaweed can easily obtain carbon dioxide d to consume in photosynthesis, promoting the growth of seaweed and shellfish and increasing the number of fish that feed on them. In this manner, it can be concluded that a mechanism has been established in which calcium carbonate a, which was eaten by fish, turned into droppings, and then washed up on the beach 25 and supplied to the backshore 25a, is changed into calcium bicarbonate g, which neutralizes acid rain, then flows into the sea and stabilizes the pH of the seawater 20. Furthermore, the sand 24 that serves as the base for forming the circulation cycle of calcium carbonate a is supplemented by sediment flowing in from rivers and river mouths. In addition, calcium oxide contained in the basalt in the Earth's crust absorbs rainwater and becomes calcium hydroxide, and then dissolves in acid rain containing carbon dioxide to become calcium carbonate, which acts as a buffer against further acid rain and becomes calcium bicarbonate g as described above, and acts in the same way as above. In addition, when calcium oxide contained in the basalt in the Earth's crust comes into contact with rainwater that continues to permeate into the ground even after acid rain is neutralized, calcium hydroxide f is produced and then limewater is produced, which permeates into the sand 24 from a river or groundwater vein, and flows toward the sea at a river mouth or underground. In this case, unlike when calcium carbonate absorbs carbon dioxide and becomes calcium bicarbonate g before flowing into the sea, calcium hydroxide f becomes alkaline limewater dissolved in the water and flows into the ocean without absorbing carbon dioxide. However, this limewater not only absorbs carbon dioxide and helps to normalize the acidified ocean, but can also supply calcium ions, creating an environment in which marine organisms can obtain calcium ions and easily grow.

However, at present, sea bream, grouper, filefish, pufferfish, octopus, and the like are caught by people through fishing, and shellfish are also caught by people through fishing, and the shells, which are the source of calcium carbonate a, are disposed of as industrial waste after people eat the shellfish. Therefore, the amount of calcium carbonate a deposited in the sand 24 of the seabed 23 has been drastically reduced. As a result, shellfish and seaweed do not grow and their numbers decrease, leading to a decline in the number of fish that feed on them. Furthermore, the pH of seawater 20 is also decreasing due to acid rain, and the backshore 25a of the beach 25, which acted as a buffer against acid rain, is also decreasing due to construction projects such as coastal development projects, which exacerbates these circumstances. In addition, the calcium oxide contained in the basalt and the like that form the Earth's crust is just over 10%, and therefore even if the above-described aqueous solution of calcium bicarbonate g or limewater is formed, it cannot continue to form forever. Normally, natural landslides caused by weathering and the like, crustal movement, and other such factors would cause rainwater flow paths passing through new soil and sand to be renewed, but due to urban development and the construction of sediment control dams and the like, modification has been performed such that rainwater passes through maintained or stabilized waterways, and new aqueous solution of calcium bicarbonate g or limewater is not supplied. Accordingly, this aqueous solution of calcium bicarbonate g or limewater passes through a maintained waterway and then is made to flow into the sea at a specific river mouth having a discharge channel. As a result, calcium ions are concentrated only at this specific river mouth, and in some locations, this has led to the abnormal growth of shellfish such as oysters.

Accordingly, if this cycle of calcium carbonate a is restored, it will be possible to efficiently absorb carbon dioxide d and increase the populations of shellfish, seaweed, and fish, and it is thought that the most effective way to do this is to dissolve calcium carbonate a with acid rain to produce liquid calcium bicarbonate g, and return the liquid calcium carbonate g to the sea. That is, simply supplying calcium carbonate a to the sea will not improve the pH of the seawater 20 because the calcium carbonate a will not dissolve in the alkaline seawater 20, and the seawater 20 will simply act as a direct buffer against acid rain. Some marine areas are acidic due to acid rain, and in such locations, calcium carbonate a becomes calcium bicarbonate g, but this is inefficient. The most efficient way is to supply calcium carbonate a to the backshore 25a of a beach 25 with good drainage in a region bordering a coast 2. In this way, calcium carbonate a acts as a buffer against acid rain, absorbing carbon dioxide d, and becomes liquid calcium bicarbonate g, which permeates into the sand 24 from the backshore 25a and flows into the sea. This not only reduces carbon dioxide d and stabilizes the pH of the seawater 20, but also creates an environment rich in calcium bicarbonate g from which young oysters can easily obtain calcium carbonate a to form their skeletons via the sand 24, and from which seaweed can easily obtain carbon dioxide d to consume in photosynthesis, thereby promoting the growth of seaweed and shellfish and increasing the number of fish that feed on them. It is thought that when acid rain falls for shorter periods of time, the concentration of carbon dioxide d dissolved in the rainwater will gradually change, and calcium carbonate a may not change into calcium bicarbonate g. However, since the molecular weight of carbon dioxide d dissolved in acid rain is 44g, which is heavier than the molecular weights of oxygen and nitrogen in the air, it is pushed to the ground and sea surface by the rainfall, seeping into the ground and sea surface, and the concentration of carbon dioxide d on the ground and sea surface will increase. However, when the rain stops and the air dries, wind blows outdoors, making it easier for carbon dioxide d on the ground and sea surface to diffuse. However, as mentioned above, carbon dioxide d that has seeped into the sea surface or ground is not likely to escape because its molecular weight is heavier than the molecular weights of the oxygen and nitrogen in the air. Of these, carbon dioxide d on the sea surface is dispersed in seawater 20, and since seawater 20 itself is alkaline, it becomes difficult for calcium carbonate a to absorb carbon dioxide d. However, carbon dioxide d on the ground tends to accumulate on the ground surface, making it easier for calcium carbonate a to absorb carbon dioxide d. In particular, in a location with good drainage such as a beach 25, after the rain stops, water c tends to drain away or evaporate quickly, but carbon dioxide d tends to remain in the voids left behind, creating an environment in which calcium carbonate a can easily absorb carbon dioxide d. On the beach 25, the backshore 25a on the landward side 22 of, and adjacent to, the high tide line 21 is preferable because it is less susceptible to the influence of seawater 20, that is, it is less likely to become alkaline, making it easier for calcium carbonate a to absorb carbon dioxide d.

Furthermore, if calcium carbonate a is supplied to a foreshore 25b or outer beach 26 of such a coast 2, it will accumulate on the seabed 23 and then be washed up onto the backshore 25a by the waves, and it is thought that this will have the same effect as when calcium carbonate a is supplied to the backshore 25a as described above. For this reason, calcium carbonate a may also be supplied to such a marine area.

However, since it takes a very long time for the calcium carbonate a to be washed up from the seabed 23 to the backshore 25a due to wave action, it is most preferable to supply the calcium carbonate a to the backshore 25a, which has good drainage, on the landward side 22 of the high tide line 21 of the coast 2, as described above.

In addition, in recent years, many locations have been developed with concrete to prevent the inflow of sediment from rivers and river mouths, and therefore new sand 24 is not being supplied in such locations. As a result, beaches 25 are not being formed, and instead, sand is being eroded from the backshore 25a, causing beaches 25 to disappear. Accordingly, in such places, even if calcium carbonate a is supplied to the foreshore 25b or outer beach 26, it will not be washed up onto the backshore 25a by the waves, and therefore it is necessary to supply calcium carbonate a directly to the backshore 25a, which has good drainage and is on the landward side 22 of the high tide line 21 of the coast 2, as described above.

In addition, when it rains, the marine environment can be improved by supplying calcium hydroxide f and/or calcium carbonate a to the backshore 25a on the landward side 22 of the high tide line 21 of the coast 2 as described above. However, acid rain also flows into the sea from rivers and waterways, and the pH of the seawater 20 decreases due to the acid rain that flows into the sea from these rivers and waterways. Therefore, in marine areas near river mouths, if the pH is acidic, calcium hydroxide f and/or calcium carbonate a may be supplied to the marine area to prevent the pH from decreasing, or calcium hydroxide f and/or calcium carbonate a may be supplied to such areas near river mouths or riverbeds to prevent the pH from decreasing.

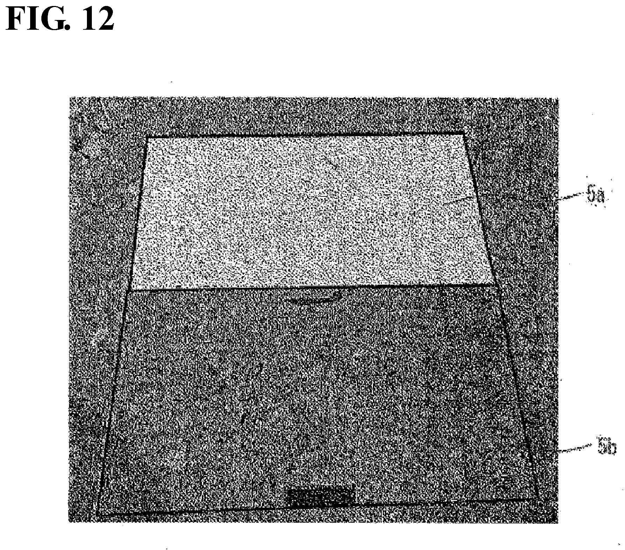

In addition, calcium hydroxide f and/or calcium carbonate a may be supplied to these rivers and waterways to prevent a decrease in pH before they are allowed to flow into the sea. Specifically, calcium hydroxide f and/or calcium carbonate a may be directly introduced into rivers and waterways, or calcium hydroxide f and/or calcium carbonate a may be applied in the form of a paste or scattered in the form of a powder on the surface of an artificial concrete structure 5 such as a river levee, a weir, a waterway, and a roadside gutter for directing rainwater into a waterway, which is formed for the purpose of river maintenance and flows into the sea (e.g., roadside gutter covers 5a and 5b as shown in FIG. 12). Naturally, since water flows in rivers and waterways, it is impossible to supply calcium hydroxide f and/or calcium carbonate a to a surface of the concrete structure 5 below the planned water level except by direct introduction. Therefore, calcium hydroxide f and/or calcium carbonate a can be supplied to the surface of the concrete structure 5 above the planned water level by applying it in the form of a paste or by scattering it in the form of a powder. Also, even if the water level is below the planned water level, if the river dries up on sunny days, calcium hydroxide f and/or calcium carbonate a can be supplied after the river dries up. For example, calcium hydroxide f and/or calcium carbonate a can be easily applied to the surface of a roadside gutter and its covers 5a and 5b, an L-shaped gutter, and catch basins thereof that are dry on sunny days.

In addition, in such locations, the powder may be scattered on the surfaces without being applied as a paste. That is, since acid rain needs to flow a considerable distance from such an area before it flows into the sea, even if calcium hydroxide f and/or calcium carbonate a are supplied in the form of a powder, the carbon dioxide d in the acid rain will be absorbed as it flows through the waterway, neutralizing the acid rain and yielding calcium bicarbonate g. Therefore, the time it takes for the acid rain to flow into the sea is used as a buffer against the acid rain and to prevent a decrease in the pH of the seawater 20. Even if the rain stops and the waterway dries out at an intermediate stage before the acid rain flows into the sea, calcium bicarbonate g will simply lose water c and carbon dioxide d and return to calcium carbonate a. If it rains again, it will absorb the carbon dioxide d in the acid rain and become calcium bicarbonate g. Therefore, even if it returns to calcium carbonate a part of the way through the waterway, it is the same as if calcium carbonate a had been scattered at a location part of the way through the waterway. In addition, calcium hydroxide f absorbs carbon dioxide d to become calcium carbonate a, and then further absorbs carbon dioxide d to become calcium bicarbonate g. However, even if calcium hydroxide f is exposed to rainwater and that rainwater flows into the ocean, the rainwater in that case will become alkaline limewater. Therefore, this limewater will absorb carbon dioxide and act to normalize the acidified ocean, and at the same time, it can supply calcium ions, creating an environment in which marine organisms can obtain calcium ions and easily grow.

In addition, even if the rain stops in such gutters or waterways and carbon dioxide d escapes from calcium bicarbonate g again, carbon dioxide d has a larger molecular weight and is heavier than the nitrogen and oxygen in the air, and carbon dioxide d is more likely to remain in closed-system paths such as covered gutters, catch basins, and waterways. Therefore, even if the rain ultimately stops, calcium bicarbonate g is likely to remain as-is, and even if it returns to carbon dioxide d, it will tend to remain in these closed-system paths. Therefore, when it rains again, the acid rain will be neutralized and the calcium bicarbonate g can flow into the ocean as-is.

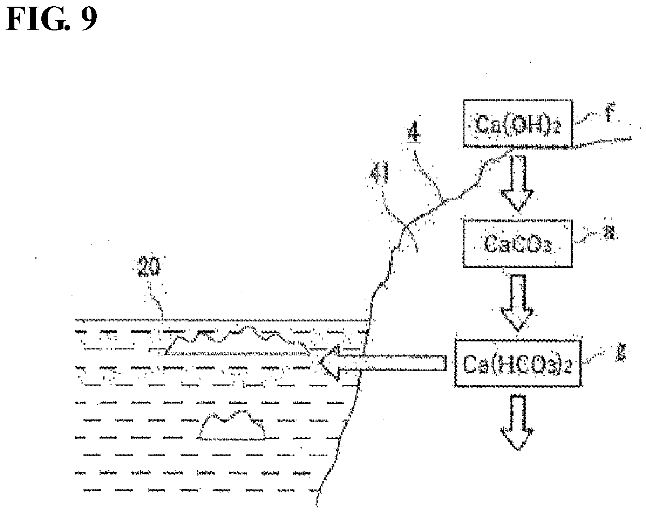

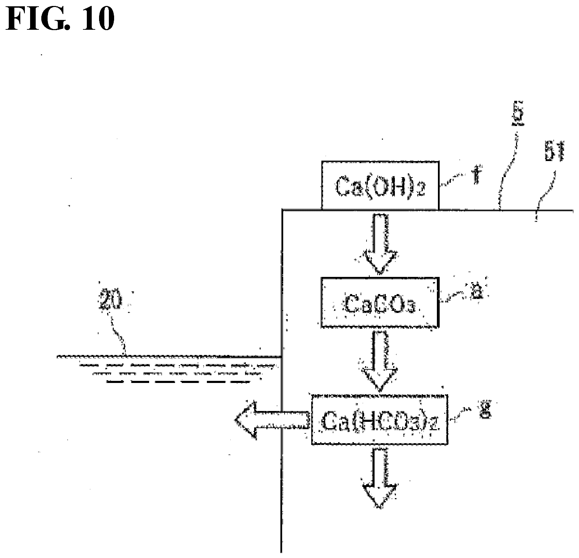

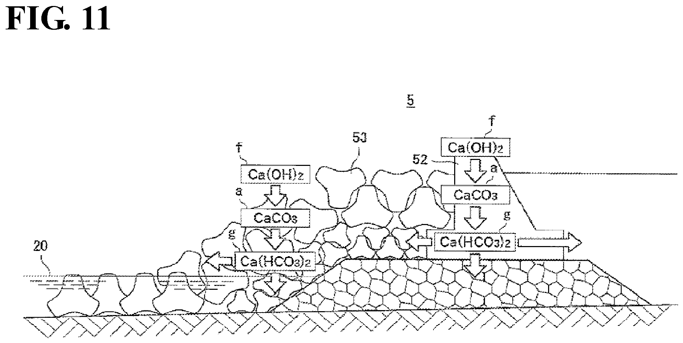

Furthermore, in the case of a natural structure 4 such as a reef 41 shown in FIG. 9, or an artificial concrete structure 5 such as a quay 51 shown in FIG. 10, or a breakwater 52 and wave-dissipating blocks 53 shown in FIG. 11, where the backshore 25a as described above is not formed, there is no backshore 25a on land to which to supply powdered calcium carbonate a, and even if calcium carbonate a is supplied to the reef 41, the quay 51, the breakwater 52, or the wave-dissipating blocks 53, it will be immediately washed away by the seawater 20 and fall off. Accordingly, in the case of such natural structures 4 and concrete structures 5, it is preferable to provide calcium hydroxide f and/or calcium carbonate a in the form of applying the above-mentioned plaster or paste. Originally, in order to receive the alkaline seawater 20, the reef 41 that is the natural structure 4 is made of basalt and limestone, and the quay 51, the breakwater 52, and the wave-dissipating blocks 53 that are the concrete structures 5 are made of alkaline concrete. The basalt, limestone, and concrete (including the concrete structures 5 of the river mentioned above in addition to the quay 51, breakwater 52, and wave-dissipating blocks 53) all contain calcium oxide b or calcium carbonate a, but the basalt, limestone, and concrete themselves act as a buffer against acid rain and become calcium bicarbonate g, which permeates into the ground or dissolves in seawater 20 and is washed away. When looking at concrete structures 5 such as artificial quays 51, breakwaters 52, and wave-dissipating blocks 53, those that have been in use for a long time show that the surface concrete has deteriorated and the internal aggregate is exposed, which clearly shows that calcium hydroxide f and calcium carbonate a have been lost due to the buffering effect against acid rain. As an example, FIG. 12 shows a roadside gutter cover 5a that has just been replaced and a roadside gutter cover 5b that has changed over time. Calcium hydroxide f and calcium carbonate a in the concrete of the cover 5b that has changed over time have been consumed due to acting as a buffer against acid rain, exposing the aggregate inside and resulting in deterioration. The rate at which this type of deterioration occurs varies depending on the location and region, but exposure of aggregate has been confirmed in as little as three years, and the deterioration will eventually progress inward, ultimately resulting in destruction. However, by applying calcium hydroxide f and/or calcium carbonate a in the form of plaster or paste to the surfaces of reefs 41 and concrete structures 5 such as quays 51, breakwaters 52, and wave-dissipating blocks 53, it is possible to provide a buffering effect against acid rain, restore calcium carbonate a in these natural structures 4, and slow the deterioration of the concrete in these concrete structures 5. Note that calcium hydroxide f and/or calcium carbonate a is not particularly limited to being applied to concrete structures 5 in which the aggregate inside the concrete is exposed, such as the roadside gutter cover 5b shown in FIG. 12 that has deteriorated over time, but may also be applied to a recently-replaced roadside gutter cover 5a. In the case of a recently-replaced roadside gutter cover 5a, the roadside gutter cover 5a itself can act as a buffer against acid rain. However, in the case of a roadside gutter cover 5b that has deteriorated over time, it becomes less likely to act as a buffer against acid rain. Therefore, in terms of acting as a buffer against acid rain, it is more preferable to apply the present invention to a roadside gutter cover 5b that has deteriorated over time, as this can better prevent a decrease in the pH of seawater 20 due to acid rain.

Note that in cases where the material can be applied as a paste or plaster, calcium hydroxide f absorbs carbon dioxide d and dries to produce calcium carbonate a. However, if the particle size of the original calcium hydroxide f is fine, the surface of the coating will be slippery after drying. Accordingly, when applying calcium hydroxide f and/or calcium carbonate a to places where it is expected that people will walk, such as quays 51, breakwaters 52, and wave-dissipating blocks 53, it is preferable to add roughly crushed calcium carbonate a as an aggregate to the paste or plaster, whereby the film obtained after drying will not be slippery when people walk on it.

In addition, when applying the paste or plaster, it is preferable to apply it to the portion of the coast 2 on the landward side 22 of the high tide line 21, that is, above the portion that is submerged in seawater 20 at high tide, that is, to the portion of the reef 41, the quay 51, the breakwater 52, or the wave-dissipating block 53 that is not submerged in seawater 20 and is open to the atmosphere. When applied to such a portion, the calcium hydroxide f in the paste or plaster absorbs carbon dioxide d from the atmosphere and changes into calcium carbonate a, and this calcium carbonate a absorbs carbon dioxide d in the atmosphere or rainwater and changes into liquid calcium bicarbonate g. This calcium bicarbonate g permeates into the reef 41, the quays 51, the breakwater 52, or the wave-dissipating blocks 53 to which the paste or plaster is applied, is fixed in the reef 41, the quay 51, the breakwater 52, and the wave dissipating blocks 53, and flows into the sea, not only stabilizing the pH of the seawater 20, but also creating an environment that makes it easy to supply calcium carbonate a to young oysters and carbon dioxide d to seaweed.

Furthermore, calcium hydroxide f and/or calcium carbonate a are preferably provided on the landward side 22 of the high tide line 21 of the coast 2, particularly on the backshore 25. However, as long as the location is such that rainwater can flow into the seawater 20 after permeation, calcium hydroxide f and/or calcium carbonate a may be provided on the landward side 22 of the high tide line 21 of the coast 2 at a location other than the portion of the reef 41, the quay 51, the breakwater 52, or the wave-dissipating block 53 that is not submerged in the seawater 20 and is open to the atmosphere as described above. If the path is a river, waterway, or drainage ditch and does not pass through a sewage treatment facility, then even if it is considerably far away from the high tide line 21 of the coast 2, rainwater can permeate and flow into the seawater 20. However, if the path is not such a location, then depending on the topography and groundwater veins, it is best to be 1000 m, and preferably 100 m on the landward side 22 from the high tide line 21 of the coast 2, and even more preferably within the range of the backshore 25 mentioned above.

According to this carbon dioxide recovery method, 1 mole of carbon dioxide d generated during the calcination of 1 mole of calcium carbonate a serving as raw material is recovered as-is or in a form converted into carbonated water e and then fixed underground, absorbed onto an adsorbent, used in the production of a crop 32, used as a culture solution, used as a synthetic material, or used as a beverage. The obtained calcium oxide b is slaked to obtain calcium hydroxide f, and 1 mole of carbon dioxide d is recovered by exposing this calcium hydroxide f to the atmosphere, making it possible to recover 2 moles of carbon dioxide d from 1 mole of calcium carbonate a. Of these, 1 mole of carbon dioxide d is the carbon dioxide d that was originally fixed in the calcium carbonate a of the raw material and has been released. This released carbon dioxide d is not released into the atmosphere due to being recovered as carbonated water e, and calcium hydroxide f obtained by slaking the calcium oxide b obtained after the release can be exposed to a desired atmosphere to recover the carbon dioxide d that has already been released into the atmosphere. Accordingly, by concentrating the recovery of carbon dioxide d in specific regions such as industrial regions where large amounts of carbon dioxide d are likely to be generated, it is possible to efficiently reduce carbon dioxide d.

In addition, the carbon dioxide d that was originally fixed in the calcium carbonate a of the raw material is first recovered, then the resulting calcium oxide b is slaked to obtain calcium hydroxide f, and the calcium hydroxide f is exposed to the atmosphere to recover the carbon dioxide d. Therefore, the recovery of the carbon dioxide d can be performed naturally, without the need to actively absorb it into an absorption medium while operating an apparatus as in the conventional method.

Moreover, if the calcium carbonate a re-obtained by recovering this carbon dioxide d is placed on the landward side 22 of the high tide line 21 of the coast 2 that becomes an acidic environment during rainfall, or on the surface of a concrete structure 5 of a river or waterway that is above the planned water level of the river or waterway that flows into the coast 2 in a region that becomes an acidic environment during rainfall, the buffering action of the calcium carbonate a can recover an additional 1 mole of carbon dioxide d in the rainwater that causes acid rain due to rainfall, and the problem of the decrease in pH of seawater 20 due to carbon dioxide d can be solved. At this time, calcium carbonate a acts as a buffer against acid rain and turns into liquid calcium bicarbonate g, which permeates into the sand 24, reef 41, and concrete structure 5 from the landward side 22, not only stabilizing the pH of the seawater 20, but also creating an environment rich in calcium bicarbonate g from which young oysters can easily obtain calcium carbonate a to form their skeletons, and from which seaweed can easily obtain carbon dioxide d to consume in photosynthesis, promoting the growth of seaweed and shellfish and increasing the number of fish that feed on them. However, excess calcium bicarbonate g will eventually permeate into the basalt in the seabed 23, where it will be mineralized and fixed. Similarly, even if calcium bicarbonate g does not flow into the ocean, when it reaches the basalt in the Earth's crust, it will be absorbed by calcium oxide b in the basalt, becoming mineralized and fixed. Accordingly, even if the calcium bicarbonate g cannot flow into the sea as a result of being too far on the landward side 22 from the high tide line 21 of the coast 2 in a region that becomes an acidic environment during rainfall, the calcium bicarbonate g will be mineralized and fixed in the Earth's crust, and therefore carbon dioxide d can still be recovered. However, allowing calcium bicarbonate g to flow into the ocean is preferable in terms of improving the marine environment, such as promoting the growth of seaweed and shellfish and increasing the number of fish that feed on them. In addition, even if calcium hydroxide f does not absorb carbon dioxide d and become calcium carbonate a, but is exposed to rainwater, river water, groundwater, or the like as calcium hydroxide f, the limewater that is formed is alkaline and will absorb carbon dioxide and work to normalize the acidified oceans.

In addition, carbon dioxide d generated during calcination of the calcium carbonate a serving as raw material can be recovered in water c cooled by the cooling energy obtained by driving a heat pump 16 using the heat energy generated during the calcination, to produce carbonated water e, and thus the carbon dioxide d can be recovered at low cost.

In this case, the obtained carbonated water e also has high general-purpose uses. For example, it may be used as water spray instead of carbon dioxide gas used in the greenhouse 3, or it may be injected directly into soil 33 for use in photosynthesis in cultivating crops 32, it may be used as a culture solution for hydroponic cultivation of crops 32, it may be used as a culture solution for euglena and the like that grow by photosynthesis, it may be used as drinking water, or it may be used as a raw material for producing a synthetic fuel such as alcohol.

In the carbon dioxide recovery method of the present invention, carbon dioxide d is recovered (1 mole) from 1 mole of calcium carbonate a serving as raw material to obtain calcium oxide b, and calcium hydroxide f obtained by slaking this calcium oxide b is exposed to the atmosphere to recover (1 mole) carbon dioxide d in a specific region where carbon dioxide d is likely to be generated, and the thus-obtained calcium bicarbonate g is scattered on the landward side 22 of the high tide line 21 of the coast 2, which becomes an acidic environment during rainfall, to recover (1 mole) carbon dioxide d in the rainwater. Thus, 3 moles of carbon dioxide d are recovered from 1 mole of calcium carbonate a serving as raw material. However, powdered calcium carbonate a may also be directly scattered on the landward side 22 of the high tide line 21 of a coast 2 that becomes an acidic environment during rainfall, without using calcium hydroxide f as the raw material, to recover carbon dioxide d (1 mole) in the rainwater. In this case, it is not possible to obtain carbonated water e or recover carbon dioxide d from the atmosphere, and therefore it is not possible to recover 3 moles of carbon dioxide d from 1 mole of calcium carbonate a serving as raw material. However, it is possible to absorb the carbon dioxide d in rainwater, which causes acid rain during rainfall, and recover 1 mole of carbon dioxide d from 1 mole of calcium carbonate a, thereby neutralizing the acid rain. This makes it possible to solve the problem of a decrease in the pH level of the sea caused by acid rain containing dissolved carbon dioxide d, and thereby improve the marine environment. Note that in this case, it is preferable to use calcium carbonate a having an aragonite structure, which is more soluble, rather than calcium carbonate a having a calcite structure, which is less soluble. Specifically, it is preferable to use crushed shells of coral, pteropods, or clams rather than shells of foraminifera, sea urchins, or scallops.

Note that the present invention can be implemented in various other forms without departing from the spirit or main characteristics thereof. For this reason, the above-described embodiments are merely illustrative in all respects and are not to be interpreted as limiting. The scope of the present invention is defined by the claims and is not limited in any way by the text of the specification. Furthermore, all modifications and variations within the scope of the claims are within the scope of the present invention.

### Industrial Applicability

By using existing calcium carbonate raw materials such as seashells, carbon dioxide can be reduced, and it is possible to achieve improvement of the marine environment, which is being acidified due to absorption of carbon dioxide.

### List of Reference Numerals

- 1: Calcination apparatus
- 16: Heat pump
- 2: Coast
- 20: Seawater
- 21: High tide line
- 22: Landward side
- 32: Crop
- 41: Reef
- 51: Quay
- 52: Breakwater
- 53: Wave-dissipating block
- a: Calcium carbonate
- b: Calcium oxide
- c: Water
- d: Carbon dioxide
- e: Carbonated water
- f: Calcium hydroxide
- g: Calcium bicarbonate

## Claims

1. A carbon dioxide recovery method comprising providing calcium hydroxide and/or calcium carbonate on a landward side of, and adjacent to, a high tide line of a coast of a region where carbon dioxide is present during rainfall.

2. A carbon dioxide recovery method comprising providing calcium hydroxide and/or calcium carbonate on a surface of a reef or a marine concrete structure on a landward side of, and adjacent to, a high tide line of a coast in a region where carbon dioxide is present during rainfall, the surface being above a portion that is immersed in seawater at high tide.

3. A carbon dioxide recovery method comprising providing calcium hydroxide and/or calcium carbonate on a surface of a concrete structure of a river or waterway flowing into the sea, the surface being on a landward side of, and adjacent to, a high tide line of a coast in a region where carbon dioxide is present during rainfall.

4. The carbon dioxide recovery method according to claim 2, wherein the concrete structure has been in place for three or more years since construction or has internal aggregate exposed on its surface.

5. The carbon dioxide recovery method according to claim 3, wherein the concrete structure has been in place for three or more years since construction or has internal aggregate exposed on its surface.

6. The carbon dioxide recovery method according to any one of claims 1 to 5, wherein calcium oxide is produced by calcining calcium carbonate serving as raw material in a closed environment, carbon dioxide released during calcination is recovered or used, and the calcium oxide obtained through the calcination is slaked to obtain calcium hydroxide, the calcium hydroxide is exposed to the atmosphere to absorb carbon dioxide, thereby obtaining calcium carbonate again, and the calcium hydroxide and/or calcium carbonate obtained in this manner is used.

7. The carbon dioxide recovery method according to claim 6, wherein renewable energy is used in the calcination of calcium carbonate.

8. The carbon dioxide recovery method according to claim 6, wherein the calcium carbonate serving as raw material is seashells.

9. The carbon dioxide recovery method according to claim 6, wherein heat energy generated when calcining the calcium carbonate serving as raw material is used to prepare hot water to be stored in a water heater, or to adjust the temperature of a greenhouse.

10. The carbon dioxide recovery method according to claim 6,
wherein the carbon dioxide generated when the calcium carbonate serving as raw material is calcined is:
allowed to permeate underground, where it is mineralized and fixed,
recovered by being adsorbed onto a carbon dioxide adsorbent,
directly recovered as carbon dioxide gas, used as raw material for a synthetic fuel, or released into a greenhouse for use in production of a crop.

11. The carbon dioxide recovery method according to claim 6,
wherein a heat pump is driven by heat energy generated when the calcium carbonate serving as raw material is calcined, water is cooled by cooling energy obtained by the heat pump, carbon dioxide generated during the calcination is recovered in the cooled water, and carbonated water obtained in this manner is:
allowed to permeate underground, where it is mineralized and fixed,
used in production of a crop,
used as raw material for a synthetic fuel, or used as a culture solution for photosynthesis.

12. A calcination apparatus for calcining calcium carbonate to be used in the carbon dioxide recovery method according to claim 7, comprising:
a reaction vessel capable of storing calcium carbonate raw material in a sealed state,
wherein the reaction vessel is provided with a heater that uses renewable energy to heat the calcium carbonate raw material introduced into the reaction vessel to a temperature at which the calcium carbonate raw material is decomposed into calcium oxide and carbon dioxide, and
the reaction vessel is provided with an exhaust path for separating and recovering the carbon dioxide obtained in the reaction vessel from the reaction vessel to the outside of the reaction vessel by decomposition pressure and/or pressure feeding.

13. The calcination apparatus according to claim 12, further comprising a gas cylinder to be filled with carbon dioxide generated in the reaction vessel, the gas cylinder being provided at an exhaust destination of the exhaust path.

14. The calcination apparatus according to claim 12, wherein the reaction vessel is provided with a water supply path that supplies water for obtaining calcium hydroxide by adding water to and slaking the calcium oxide obtained in the reaction vessel.

15. The calcination apparatus according to claim 12, further comprising:
a heat pump that utilizes heat generated in the reaction vessel; and
a carbon dioxide absorption device that produces cooled water by cooling water using cooling energy obtained by the heat pump and absorbs carbon dioxide into the cooled water,
wherein the exhaust destination of the exhaust path is connected to the carbon dioxide absorption device such that the carbon dioxide from the exhaust path is dissolved in the cooled water of the carbon dioxide absorption device.
